# EUROPÄISCHE PATENTSCHRIFT

(11) **EP 1 222 065 B1**
(45) Veröffentlichungstag und Bekanntmachung des Hinweises auf die Patenterteilung: **18.06.2003**
(21) Anmeldenummer: 00984863.1
(22) Anmeldetag: 18.10.2000
(51) Int. Cl.: B29C 47/08, B29C 45/14

(54) **EXTRUSIONSANLAGE MIT SCHNECKENWECHSELEINRICHTUNG**
EXTRUSION SYSTEM COMPRISING A SCREW CHANGING DEVICE
SYSTEME D'EXTRUSION MUNI D'UN DISPOSITIF DE CHANGEMENT DE VIS

(30) Priorität: 22.10.1999 DE 19952642
(43) Veröffentlichungstag der Anmeldung: 17.07.2002
(73) Patentinhaber: Berstorff GmbH, 30625 Hannover (DE)
(72) Erfinder: CHSZANIECKI, Siegfried, 30171 Hannover (DE)
(74) Vertreter: Meissner, Peter E., Dipl.-Ing.
(86) Internationale Anmeldenummer: DE0003770
(87) Internationale Veröffentlichungsnummer: WO01028753

(56) Entgegenhaltungen:
- DD-A- 288 350
- US-A- 4 004 787
- PATENT ABSTRACTS OF JAPAN vol. 008, no. 201 (M-325), 14. September 1984 (1984-09-14) & JP 59 089130 A (SUMITOMO JUKIKAI KOGYO KK), 23. Mai 1984 (1984-05-23)
- "REPOSITIONING OF MOTOR AND GEARBOX FACILITATE EXTRUDER SCREW CHANGE" MODERN PLASTICS INTERNATIONAL,CH,MCGRAW-HILL,INC. LAUSANNE, Bd. 21, Nr. 1, 1991, Seite 75 XP000223312 ISSN: 0026-8283
- PATENT ABSTRACTS OF JAPAN vol. 006, no. 163 (M-152), 26. August 1982 (1982-08-26) & JP 57 080036 A (TOSHIBA MACH CO LTD), 19. Mai 1982 (1982-05-19)

## Beschreibung

Die Erfindung betrifft eine Extrusionsanlage mit mindestens einem Schneckenextruder, dessen mindestens eine Schnecke über eine Kupplung in Antriebsverbindung mit einem durch einen Motor angetriebenen Getriebe steht, wobei die Kupplung bezüglich der Schnecke an- und abkoppelbar ist.

Extrusionsanlagen werden insbesondere in der Kunststofftechnik zur Erzeugung von Kunststoffprodukten und auch zur Aufbereitung von Kunststoffen, d.h. zur Herstellung von aus verschiedenen Stoffen zusammengesetzten Zwischenprodukten eingesetzt. Extrusionsanlagen für den letztgenannten Zweck werden auch als Compoundieranlagen bezeichnet und weisen vielfach Extruder mit zwei oder mehr miteinander kämmenden Schnecken auf. In solchen Compoundieranlagen werden beispielsweise Additive wie Farbstoffe oder Fasermaterialien in die Kunststoffrohmasse eingemischt und möglichst gleichmäßig in dieser verteilt. Aufgrund der Vielfalt von insbesondere thermoplastischen Kunststoffen und der Vielfalt von Additiven, die in ihrer Kombination unterschiedliche Materialeigenschaften aufweisen, werden für eine optimale Produktion Schnecken eingesetzt, die in ihrer geometrischen Gestaltung möglichst optimal an die jeweiligen Werkstoffeigenschaften des zu verarbeitenden Materials angepaßt sind. Es gibt auch Schnecken, die für die Verarbeitung einer relativ breiten Werkstoffpalette im Mittel vergleichsweise gut geeignet sind. Das bedeutet allerdings, daß eine solche Schnecke oder ein solches Schneckenpaar bei der Verarbeitung der einzelnen Werkstoffe regelmäßig mehr oder weniger weit vom eigentlichen Betriebsoptimum entfernt arbeiten muß. Dies kann mit einer entsprechenden Verminderung der Produktqualität verbunden sein und/oder bringt eine Verminderung der Produktionsleistung mit sich. Insbesondere in Großanlagen mit hohen Durchsatzleistungen werden daher häufig Spezialschnecken eingesetzt, die für die Verarbeitung des jeweiligen Werkstoffs optimal geeignet sind, also bei höchster Produktionsleistung eine sehr gute Qualität liefern.

Bei der Verarbeitung von Kunststoffchargen unterschiedlicher Werkstoffe in kleineren Mengen bedeutet der Einsatz von Spezialschnecken für den jeweiligen Werkstoff einen unverhältnismäßig hohen Betriebsaufwand, da ein Wechsel der Schnecken bisher regelmäßig einen relativ hohen Aufwand insbesondere in Form des Stillstands der Produktionsanlage erfordert. In vielen Betrieben ist es daher üblich, kleinere Chargen unterschiedlicher Stoffe auf Sondermaschinen zu verarbeiten, die im allgemeinen weniger leistungsfähig sind als die Großanlagen für die Hauptproduktmengen. Solche Sondermaschinen erfordern nicht nur einen entsprechenden Raumbedarf, sondern zeichnen sich vielfach durch einen relativ geringen Nutzungsgrad aus. Dies bedeutet letztlich, daß die Verarbeitung kleinerer Chargen im Vergleich zu den Hauptproduktionsmengen der Standardprodukte verhältnismäßig teuer ist.

Aus der DE 3516311 C2 ist eine Vorrichtung mit einer Vielzahl von auf einem Karrussel angeordneten Formstationen und einer an diese Formstationen im Takt andockbaren Spritzeinheit bekannt, mit der Schuhsohlen aus Polyurethan an Schuhschäfte gespritzt werden. Die Materialkomponenten für das flüssige Polyurethan werden dabei in einem mit einer kurzen, schnell drehenden (15000 bis 18000 U/min) und einseitig gelagerten Mischschnecke versehenen Mischkopf der Spritzeinheit gemischt. Zum Auswechseln der Mischschnecke kann das Mischschneckenlager samt Antrieb mittels eines Hydraulikzylindersystems, das primär für die zum Andocken des Mischkopfes an die Formstationen erforderliche Schiebebewegung ausführt, zurückgefahren werden, so daß die Mischschnecke vollständig aus dem Mischkopf herausgezogen wird, bevor sie von dem Antrieb abgekuppelt und durch eine hydraulisch verfahrbare Schneckenwechselvorrichtung gegen eine andere ausgetauscht wird. Bei längeren Schnecken würde diese Lösung einen extrem langen Bauraum erfordern. Im Unterschied zu Spritzeinheiten sind bei Extrusionsanlagen der vorgenannten Art solche Andockbewegungen nicht üblich, vielmehr bleibt das so genannte Downstream-Equipment in seiner räumlichen Anordnung zum Schneckenextruder während der Produktion unverändert.

Weiterhin ist aus der DE 3643884 A1 eine Schneckenspritzgießmaschine bekannt, bei der mittels eines Spritzzylinders die gesamte Einspritzeinheit auf einem Holmenrahmen der Spritzgießmaschine an das Spritzwerkzeug heranfahrbar ist. Zum Wechseln der Schnecke der Einspritzeinheit kann der gesamte Antrieb der Schnecke von dem Spritzzylinder auf dem Holmenrahmen ein kleines Stück zurückgefahren werden, bis die Schnecke von dem Antrieb entkuppelt ist. Um die Schnecke aus dem Schneckenzylinder der Einspritzeinheit ausbauen zu können, wird der Schneckenzylinder um eine vertikale Drehachse verschwenkt, so daß die Schnecke seitlich schräg an dem Antrieb vorbei herausgezogen werden kann. Für die Verschwenkung des Schneckenzylinders ist dieser mit einem speziellen seitlich angebrachten Schwenklager verbunden.

Aufgabe der vorliegenden Erfindung ist es, eine Extrusionsanlage der gattungsgemäßen Art dahingehend weiterzubilden, daß der Aufwand für die Umstellung der Extrusionsanlage von der Verarbeitung eines Werkstoffs auf einen anderen Werkstoff mit anderen Eigenschaften deutlich verringert wird. Es soll also unter Beibehaltung einer hohen Produktqualität und einer hohen Produktivität ein schneller Werkstoffwechsel möglich sein.

Gelöst wird diese Aufgabe für eine gattungsgemäße Extrusionsanlage durch die kennzeichnenden Merkmale des Patentanspruchs 1. Vorteilhafte Weiterbildungen der Erfindung sind in den abhängigen Unteransprüchen angegeben.

Der Grundgedanke der erfindungsgemäßen Lösung besteht darin, eine herkömmliche Extrusionsanlage mit einer Vorrichtung zu versehen, die einen besonders schnellen und einfachen Wechsel der Schnecke oder Schnecken des Extruders ermöglicht. (Im folgenden wird zur Vereinfachung meistens nur von einer Schnecke besprochen, obwohl die Erfindung selbstverständlich Extrusionsanlagen umfaßt, die einen oder mehrere Extruder in Parallel- oder Serienschaltung beinhalten und die ihrerseits mit einer, zwei oder mehreren Schnecken bestückt sein können.) Die Erfindung sieht vor, daß die Schnecke anders als üblich nicht am Extruderkopf aus dem Extruder herausgezogen wird, sondern daß dies am anderen Ende des Extruders geschieht, wo das Getriebe für den Antrieb der Schnecke angebaut ist. Dies hat den großen Vorteil, daß die an den Extruderkopf angeschlossenen nachfolgenden Aggregate (sogenanntes Downstream-Equipment) bei einem Wechsel der Schnecke nicht abgebaut werden müssen. Die Erfindung sieht vor, daß das Getriebe mit seiner Kupplung für die An- und Abkupplung der Schnecke auf einem Getriebewagen angeordnet ist, mit dem das Getriebe mit der Kupplung von der Schnecke so weit wegbewegbar ist, daß die Schnecke danach gegen ihre Förderrichtung vollständig aus dem Extruder herausziehbar ist. Außerdem ist eine Schneckenwechselvorrichtung vorgesehen, durch die die vorhandene Schnecke des Extruders aufnehmbar und durch eine in der Schneckenwechselvorrichtung befindliche andere Schnecke ersetzbar ist.

Die Bezeichnung Getriebewagen soll hier nicht in dem engen Sinn verstanden werden, daß ein solcher Getriebewagen tatsächlich auch mit Rädern zur Bewegung versehen sein muß. Es könnte sich ohne weiteres auch beispielsweise um einen Schlitten handeln, der auf Kufen in entsprechenden Führungen gleitet. Vorzugsweise ist der Getriebewagen aber mit Rollen oder Rädern zur Bewegung versehen.

Grundsätzlich könnte der Getriebewagen auch als Schwenkaggregat ausgebildet sein, so daß das Getriebe mit der Kupplung nach dem Lösen der Befestigungselemente (z.B. Schrauben), mit denen das Getriebe fest mit dem Extruder verbunden ist, beispielsweise zur Seite weggeschwenkt wird, so daß gleichzeitig die Kupplung zur Schnecke hin entkoppelt und der rückwärtige Raum zum Ziehen der Schnecke gegen ihre Förderrichtung freigemacht wird. Obwohl ein Schwenken zur Seite hin bevorzugt wird, könnte die Schwenkbewegung grundsätzlich auch nach oben oder unten hin erfolgen.

Vorzugsweise ist der Getriebewagen in der Weise ausgebildet, daß das Getriebe auf dem Getriebewagen in Richtung der Längsachse der Schnecke zurückziehbar ist, um auf diese Weise ein Abkoppeln der Kupplung von der Schnecke zu bewirken. Der Getriebewagen selbst ist zweckmäßig quer zur Längsachse der Schnecke verfahrbar. Um das Entkoppeln der Kupplung zu ermöglichen kann der Getriebewagen beispielsweise mit einem kleinen Schlitten ausgestattet sein, dessen Kufen parallel zur Förderrichtung der Schnecke verlaufen. Die beiden Bewegungen zum Entkoppeln der Kupplung und zum Wegfahren des Getriebes mit dem an dieses angeflanschten Antriebsmotor könnten prinzipiell auch dadurch ermöglicht werden, daß der Getriebewagen z.B. mit lenkbaren Rädern versehen wird.

Die Schneckenwechselvorrichtung zum mechanisierten Austausch der Schnecke kann als stationäres oder verfahrbares Schneckenmagazin mit einer Manipulationseinrichtung für das Herausziehen und Einschieben einer Schnecke ausgebildet sein. Im einfachsten Fall ist das Schneckenmagazin mit einem drehbaren Doppelarm ausgebildet, wobei der eine Arm zur Aufnahme der auszutauschenden Schnecke bestimmt ist und der andere Arm die jeweils neue Schnecke trägt. Vorzugsweise ist das Schneckenmagazin als Revolver- oder Pater-Noster-Magazin gestaltet und somit zur Aufnahme einer Vielzahl von Austauschschnecken geeignet. Damit ist eine hohe Flexibilität im Hinblick auf die Verarbeitung einer entsprechenden Vielzahl unterschiedlicher Werkstoffe gegeben.

Die Manipulationseinrichtung zum Herausziehen bzw. Einschieben einer Schnecke ist vorzugsweise ein linear beweglicher Schieber mit einer Greifvorrichtung zum Ankoppeln an die jeweilige Schnecke.

Grundsätzlich ist es möglich, die Bewegungen des Getriebewagens und der Manipulationseinrichtung durch eine Bedienungsperson zu bewirken. In diesen Fall entlastet die erfindungsgemäße Gestaltung der Extrusionsanlage die Bedienungsperson zumindest von Traglasten während der Demontage der alten und der Montage der neuen Schnecke. Außerdem können die erforderlichen Bewegungen der Schnecken in geführten Bahnen ablaufen, so daß die erforderliche Zeit für einen Schneckenwechsel erheblich reduziert wird.

Noch bedeutendere Zeitersparnisse ergeben sich, wenn der Getriebewagen und gegebenenfalls auch die Schneckenwechselvorrichtung jeweils mit einem motorischen Antrieb versehen sind. Dieser Antrieb wird zweckmäßig durch eine elektronische Steuerung betätigt, deren Programmspeicher vorzugsweise auf einen vollautomatischen Schneckenwechsel eingerichtet ist.

Einen besonders deutlichen Einsparungseffekt erzielt man, wenn man eine mit Doppelschneckenextrudem ausgestattete Extrusionsanlage im Sinne der Erfindung gestaltet, wobei die Schneckenwechselvorrichtung auf den paarweisen Schneckenwechsel eingerichtet ist. Solche Extrusionsanlagen sind insbesondere als Compoundieranlagen zur Aufbereitung thermoplastischer Kunststoffe vorteilhaft.

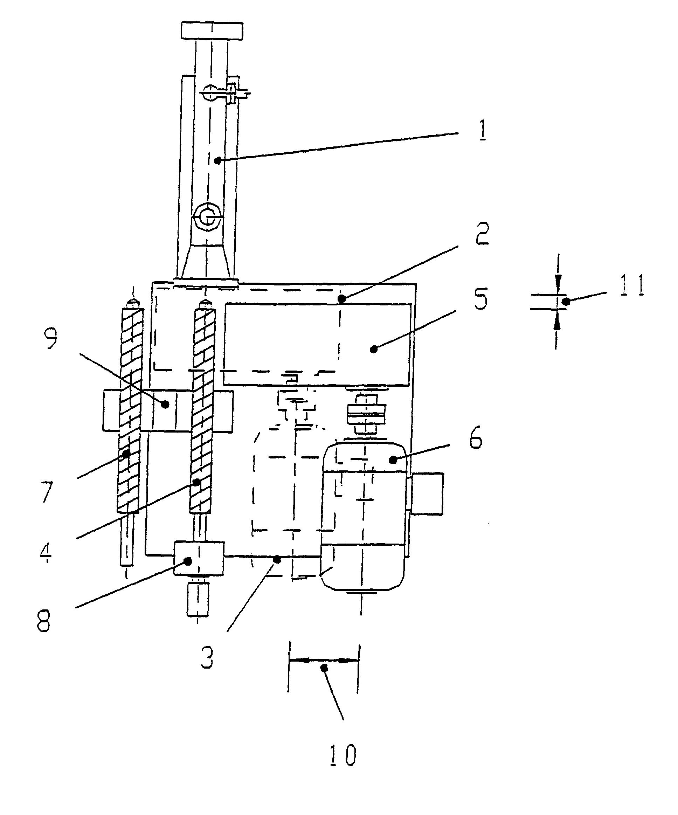

Anhand des in der einzigen Figur in stark schematisierter Form dargestellten Ausführungsbeispiels wird die Erfindung nachfolgend näher beschrieben.

Ein als Einschneckenextruder ausgebildeter Extruder 1, dessen Downstream-Equipment nicht näher dargestellt ist, weist an seinem dem Extruderkopf gegenüberliegenden Ende ein Getriebe 2 auf, an das zum Antrieb der Extruderschnecke ein Motor 3 angeflanscht ist. Das Getriebe 2, das in der Figur in seiner Arbeitsstellung gestrichelt eingezeichnet ist, ist mit einer nicht näher dargestellten Kupplung zur Ankopplung des stromaufwärtigen Endes der Extruderschnecke ausgestattet. Das Getriebe 2 mit dem daran angeflanschten Motor 3 ist auf einem Getriebewagen montiert, von dem keine näheren Einzelheiten dargestellt sind. Zum Entkoppeln der Kupplung des Getriebes 2 von einer noch im Extruder 1 befindlichen Extruderschnecke kann der Getriebewagen zum Beispiel nach Lösen einer Schnellspannvorrichtung, mit der das Getriebe 2 während des normalen Anlagenbetriebs fest an den Extruder 1 angebunden ist, ein kleines Stück entgegengesetzt zur Förderrichtung der Extruderschnecke zurückgezogen werden. Dieser Entkupplungsweg ist in der Figur mit dem Bezugszeichen 11 bezeichnet worden. Nachdem die Extruderschnecke und die Kupplung voneinander getrennt worden sind, wird der Getriebewagen im dargestellten Beispiel quer zur Förderrichtung des Extruders 1 nach rechts um ein Stück verschoben, so daß der rückwärtige Raum am Extruder 1 für den Schneckenwechsel frei wird. Der Verschiebeweg zum Schneckenwechsel ist mit dem Bezugszeichen 10 bezeichnet wurde. Das Getriebe 2 und der daran angeflanschte Motor 3 sind zur Unterscheidung von der gestrichelten Arbeitsposition in der Schneckenwechselposition mit durchgezogenen Linien dargestellt worden. In der Schneckenwechselposition ist das Getriebe mit dem Bezugszeichen 5 und der Motor mit dem Bezugszeichen 6 bezeichnet. Nachdem die Schneckenwechselposition erreicht worden ist, kann die Schnecke 4 des Extruders 1 mittels einer Manipulationsvorrichtung 8 aus dem Extruder 1 herausgezogen werden. Dabei wird sie von einem Halter einer Schneckenwechselvorrichtung 9 gehalten. Dieser Halter ist beispielsweise als doppelarmiger Schwenkarm ausgebildet. Auf dem anderen Arm, dieses doppelarmigen Schwenkarms ist eine andere Schnecke 7 gelagert, die gegen die bisher benutzte Schnecke 4 ausgetauscht werden soll. Hierzu wird die Manipulationsvorrichtung 8 von der Schnecke 4 gelöst und noch etwas weiter zurückgefahren. Anschließend wird der doppelarmige Schwenkarm in der Weise gedreht, daß die Schnecke 7 in die Position der Schnecke 4 gelangt. Durch erneute Betätigung der Manipulationsvorrichtung 8 wird danach die neue Schnecke 7 ergriffen und in den Extruder 1 eingeschoben. Der Getriebewagen mit dem Getriebe und dem Motor wird anschließend nach Zurückfahren der von der Schnecke 7 gelösten Manipulationsvorrichtung 8 von der mit 5 und 6 dargestellten Wechselposition wieder in die gestrichelte Position 2, 3 gebracht, also zunächst um den Verschiebeweg 10 wieder nach links geschoben und dann um den Entkupplungsweg 11 zurück an die im Extruder 1 befindliche gewechselte Schnecke 7 geschoben, so daß sich die Kupplung des Getriebes 2 an die neue Schnecke 7 ankoppelt. In bevorzugter Ausführung der Erfindung werden die Bewegungen des Getriebewagens und der Schneckenwechselvorichtung 9 bzw. der Manipulationsvorrichtung 8 von Motorantrieben ausgeführt, die von einer nicht dargestellten programmierbaren elektronischen Steuerung geführt werden. Da ein Schneckenwechsel auf diese Weise praktisch ohne wesentlichen Personalaufwand und in äußerst kurzer Zeit ausgeführt werden kann, ergeben sich nur sehr kurze Stillstandszeiten für die gesamte Anlage und infolge dessen erheblich geringere Stillstandskosten, als dies bisher der Fall war. Dadurch ist es wirtschaftlich vertretbar auch kleinere Chargen an Kunststoffen auf einer hochleistungsfähigen Großanlage zu verarbeiten. Dies ermöglicht die Herstellung hochwertiger Produkte zu niedrigen Kosten auch bei kleineren Mengen.

### Bezugszeichenliste:

- 1: Extruder
- 2: Getriebe in Arbeitsstellung
- 3: Motor in Arbeitsstellung
- 4: Schnecke
- 5: Getriebe in Wechsel-Position
- 6: Motor in Wechsel-Position
- 7: Wechsel-Schnecke
- 8: Manipulationsvorrichtung
- 9: Schneckenwechselvorrichtung
- 10: Verschiebeweg zum Schneckenwechsel
- 11: Entkupplungsweg

## Patentansprüche

1. Extrusionsanlage mit mindestens einem Schneckenextruder (1), dessen mindestens eine Schnecke (4) über eine Kupplung in Antriebsverbindung mit einem durch einen Motor (3) angetriebenen Getriebe (2) steht, wobei die Kupplung bezüglich der Schnecke (4) an- und abkoppelbar ist
**dadurch gekennzeichnet,**
- **daß** ein Getriebewagen vorgesehen ist, der in der Weise ausgebildet ist, daß das Getriebe (2) auf dem Getriebewagen zum Entkoppeln der Kupplung in Richtung der Längsachse der Schnecke (4) ein kleines Stück zurückziehbar ist, und der schwenkbar oder quer zur Längsachse der Schnecke (4) bewegbar ist, so daß das Getriebe (2) mit der Kupplung von der Schnecke (4) so weit wegbewegbar ist, daß die Schnecke (4) danach gegen die Förderrichtung der Schnecke (4) vollständig aus dem Extruder herausziehbar ist,
- und **daß** eine Schneckenwechselvorrichtung (9) vorgesehen ist, durch die die vorhandene Schnecke (4) des Extruders (1) aufnehmbar und durch eine in der Schneckenwechselvorrichtung (9) befindliche andere Schnecke (7) ersetzbar ist.

2. Extrusionsanlage nach Anspruch 1,
**dadurch gekennzeichnet,**
**daß** die Schneckenwechselvorrichtung (9) als verfahrbares Schneckenmagazin mit einer Manipulationseinrichtung (8) für das Herausziehen und Einschieben einer Schnecke (4, 7) ausgebildet ist.

3. Extrusionsanlage nach Anspruch 2,
**dadurch gekennzeichnet,**
**daß** das Schneckenmagazin als Revolver- oder Pater-Noster-Magazin ausgebildet ist.

4. Extrusionsanlage nach einem der Ansprüche 2 oder 3,
**dadurch gekennzeichnet,**
**daß** die Manipulationseinrichtung (8) als linear beweglicher Schieber mit einer Greifvorrichtung zum Ankoppeln an die Schnecke ausgebildet ist.

5. Extrusionsanlage nach einem der Ansprüche 1 bis 4,
**dadurch gekennzeichnet,**
**daß** die Kupplung der Schnecke (4) motorisch entkuppelbar ist.

6. Extrusionsanlage nach einem der Ansprüche 1 bis 5,
**dadurch gekennzeichnet,**
**daß** der Getriebewagen mit einem motorischen Antrieb versehen ist.

7. Extrusionsanlage nach einem der Ansprüche 1 bis 6,
**dadurch gekennzeichnet,**
**daß** die Schneckenwechselvorrichtung (9) mit einem motorischen Antrieb versehen ist.

8. Extrusionsanlage nach einem der Ansprüche 5 bis 7,
**dadurch gekennzeichnet,**
**daß** die Antriebe durch eine elektronische Steuerung betätigbar sind.

9. Extrusionsanlage nach Anspruch 8,
**dadurch gekennzeichnet,**
**daß** die elektronische Steuerung über einen Programmspeicher verfügt, der auf einen vollautomatischen Schneckenwechsel eingerichtet ist.

10. Extrusionsanlage nach einem der Ansprüche 1 bis 9,
**dadurch gekennzeichnet,**
**daß** der mindestens eine Schneckenextruder (1) ein Doppelschneckenextruder ist und daß die Schneckenwechselvorrichtung (9) auf den paarweisen Schneckenwechsel eingerichtet ist.

11. Extrusionsanlage nach einem der Ansprüche 1 bis 10,
**dadurch gekennzeichnet,**
**daß** die Extrusionsanlage eine Compoundieranlage zur Aufbereitung thermoplastischer Kunststoffe ist.

## Claims

1. Extrusion system having at least one screw-type extruder (1), whose screw (4) of which there is at least one is drivingly connected via a clutch to a transmission (2) driven by a motor (3), the clutch being capable of being coupled to and uncoupled from the screw (4), **characterised in that** a transmission carriage is provided which is so formed that the transmission (2) is capable of being withdrawn a short distance on the transmission carriage in the direction of the longitudinal axis of the screw (4) for disengagement of the clutch, and which is movable pivotably or transversely to the longitudinal axis of the screw (4), so that the transmission (2) can be moved away with the clutch from the screw (4) sufficiently far that the screw (4) can thereafter be completely removed from the extruder opposite to the conveying direction of the screw (4), and **in that** a screw changing device (9) is provided, whereby the current screw (4) of the extruder (1) can be taken out and replaced by another screw (7) located in the screw changing device (9).

2. Extrusion system according to claim 1, **characterised in that** the screw changing device (9) is formed as a movable screw magazine with a handling device (8) for removing and inserting a screw (4, 7).

3. Extrusion system according to claim 2, **characterised in that** the screw magazine is formed as a revolving or paternoster magazine.

4. Extrusion system according to either of claims 2 or 3, **characterised in that** the handling device (8) is formed as a linearly movable slide with a handle for coupling on the screw.

5. Extrusion system according to one of claims 1 to 4, **characterised in that** the clutch of the screw (4) can be disengaged from the motor.

6. Extrusion system according to one of claims 1 to 5, **characterised in that** the transmission carriage is provided with a motor drive.

7. Extrusion system according to one of claims 1 to 6, **characterised in that** the screw changing device (9) is provided with a motor drive.

8. Extrusion system according to one of claims 5 to 7, **characterised in that** the drives are actuatable by an electronic control.

9. Extrusion system according to claim 8, **characterised in that** the electronic control has a programme store, which is set up for fully automatic changing of the screw.

10. Extrusion system according to one of claims 1 to 10, **characterised in that** the extrusion system is a double-screw extruder and **in that** the screw changing device (9) is set up for changing the screws in pairs.

11. Extrusion system according to one of claims 1 to 10, **characterised in that** the extrusion system is a compounding system for preparing thermoplastic materials.

## Revendications

1. Installation d'extrusion comportant au moins une extrudeuse à vis (1), dont au moins une vis (4) est en liaison d'entraînement, par l'intermédiaire d'un accouplement, avec une transmission (2) entraînée par un moteur (3), l'accouplement pouvant être couplé et découplé vis-à-vis de la vis (4),
**caractérisée en ce que** :
- un chariot de transmission est prévu qui est réalisé de façon que la transmission (2) peut être légèrement ramenée sur le chariot de transmission, pour découpler l'accouplement, en direction de l'axe longitudinal de la vis (4) et qui peut être déplacé de façon pivotante ou transversalement par rapport à l'axe longitudinal de la vis (4), de sorte que la transmission (2) avec l'accouplement peut être éloigné de la vis (4), de sorte que la vis (4) peut être ensuite complètement retirée de l'extrudeuse à l'encontre de la direction de transport de la vis (4), et
- un dispositif de changement de vis (9) est prévu, par lequel la vis (4) présente de l'extrudeuse (1) peut être reçue et être remplacée par une autre vis (7) se trouvant dans le dispositif de changement de vis (9).

2. Installation d'extrusion selon la revendication 1,
**caractérisée en ce que** le dispositif de changement de vis (9) est réalisé comme magasin de vis déplaçable ayant un dispositif de manipulation (8) pour le retrait et l'insertion d'une vis (4, 7).

3. Installation d'extrusion selon la revendication 2,
**caractérisée en ce que** le magasin de vis est réalisé comme magasin revolver ou à augets.

4. Installation d'extrusion selon une des revendications 2 ou 3,
**caractérisée en ce que** le dispositif de manipulation (8) est réalisé comme coulisseau linéairement mobile ayant un dispositif de prise pour l'accouplement à la vis.

5. Installation d'extrusion selon une des revendications 1 à 4,
**caractérisée en ce que** l'accouplement de la vis (4) peut être découplé de façon motorisée.

6. Installation d'extrusion selon une des revendications 1 à 5,
**caractérisée en ce que** le chariot de transmission est muni d'un entraînement motorisé.

7. Installation d'extrusion selon une des revendications 1 à 6,
**caractérisée en ce que** le dispositif de changement de vis (9) est muni d'un entraînement motorisé.

8. Installation d'extrusion selon une des revendications 5 à 7,
**caractérisée en ce que** les entraînements peuvent être actionnés par une commande électronique.

9. Installation d'extrusion selon la revendication 8,
**caractérisée en ce que** la commande électronique dispose d'une mémoire de programme qui est prévue pour un changement de vis totalement automatique.

10. Installation d'extrusion selon une des revendications 1 à 9,
**caractérisée en ce que** l'extrudeuse à vis (1) est une extrudeuse à vis double et **en ce que** le dispositif de changement de vis (9) est prévu pour le changement de vis par paire.

11. Installation d'extrusion selon une des revendications 1 à 10,
**caractérisée en ce que** l'installation d'extrusion est une installation composée pour traiter des matières synthétiques thermoplastiques.
